# EUROPEAN PATENT APPLICATION

(11) **EP 1 137 129 A2**
(43) Date of publication of application: **26.09.2001**
(21) Application number: 01302399.9
(22) Date of filing: 15.03.2001
(51) Int. Cl.: H01S 3/067, H01S 3/13, H04J 14/02

(54) **Optical gain equalizer and optical gain equalizing method**

(30) Priority: 15.03.2000 JP 2000072045
(71) Applicant: NEC CORPORATION, Tokyo (JP)
(72) Inventor: Yamaguchi, Shohei, Minato-ku, Tokyo (JP)
(74) Representative: Moir, Michael Christopher

(57) **Abstract**

An optical gain equalizer is provided with an erbium-doped optical fiber (EDF). The gain equalizer selects two lights out of wavelength-division-multiplexed light, controls pumping light to the EDF based upon the result of the comparison of the levels, and flattens the inclination of the gain of the wavelength-division-multiplexed light. Another optical gain equalizer is provided with an EDF and a variable attenuator. The optical gain equalizer selects two wavelengths of the wavelength-division-multiplexed light and attenuates the wavelength-division-multiplexed light based upon the result of a comparison between the levels of the two selected wavelengths of light. The pumping light powr to the EDF that amplifies the wavelength-division-multiplexed light is controlled based upon this attenuation, and the inclination of the gain of the wavelength-division-multiplexed light is flattened.

## Description

### BACKGROUND OF THE INVENTION

### 1. Field of the Invention

The present invention relates to an optical gain equalizer and an optical gain equalizing method; it particularly relates to an optical gain equalizer and an optical gain equalizing method for controlling the inclination of the gain of wavelength division multiplexed light in a wavelength division multiplex (hereinafter called WDM) optical transmission system.

### 2. Description of the Related Prior Art

In a WDM optical transmission system, wavelength-division-multiplexed light transmitted on an optical-fiber transmission line gradually attenuates. Therefore, an optical repeater installed at a predetermined interval on the optical fiber transmission line amplifies the wavelength-division-multiplexed light. However, loss on an optical-fiber transmission line, amplification by an optical repeater and Raman amplification caused on the input side of the optical repeater depends upon wavelength. Therefore, the gain of wavelength-division-multiplexed light transmitted on an optical-fiber transmission line has predetermined inclination for a wavelength. As the system does not operate when the inclination of the gain exceeds a fixed value, an optical-fiber transmission line is provided with a block optical gain equalizer at a predetermined interval to level the gain of wavelength-division-multiplexed light.

A conventional block optical gain equalizer branches wavelength-division-multiplexed light, selects light having a specific wavelength out of branched light, converts this light to electric information and controls a variable gain equalizer based upon the electric information. However, this variable gain equalizer cannot detect the inclination of the gain of wavelength-division-multiplexed light. Therefore, a receiving station detects the inclination of the gain and transmits the detected information to a transmitting station so that the inclination of the gain is controlled. That is, the block gain equalizer cannot execute automatic control. Also, as the equalizer itself attenuates wavelength-division-multiplexed light, an interval of an optical transmission line at which the block optical gain equalizer is installed is required to be shortened, compared with an interval of another repeater.

### SUMMARY OF THE INVENTION

Therefore, the object of the preferred embodiments of the invention is to provide an optical gain equalizer and a gain equalizing method wherein the gain inclination of wavelength-division multiplexed light can be controlled with reduced loss to the light.

The optical gain equalizer is provided with an optical-fiber amplification medium that amplifies wavelength-division-multiplexed light, an optical directional coupler that branches amplified wavelength-division-multiplexed light, a filter that selects first light and second light out of branched light,and a control circuit that controls the optical-fiber amplification medium based upon difference in level between the first and second lights. The control circuit is provided with optical receivers that respectively convert the first and second lights to electric information, a comparator that compares the electric information,and a pumping light source that sends pumping light to the optical-fiber amplification medium based upon the output of the comparator. The control circuit can be also provided with a driving control circuit that controls the pumping light source based upon the output of the comparator.

Another optical gain equalizer is provided with an optical-fiber amplification medium that amplifies wavelength-division-multiplexed light, an optical directional coupler that branches amplified wavelength-division-multiplexed light, a control circuit that controls the optical-fiber amplification medium based upon branched light, a variable optical attenuator that attenuates the wavelength-division-multiplexed light, filters that respectively select first light and second light out of the branched light, and control means that controls the variable optical attenuator based upon difference in level between the first and second lights. The control means is provided with optical receivers that respectively convert the first and second lights to electric information, and a comparator that compares the electric information. The control means can be also provided with a control circuit that controls the variable optical attenuator based upon the output of the comparator. The variable optical attenuator can be installed on the input side or on the output side of the optical fiber amplification medium.

A gain equalizing method includes a step for selecting two lights having different wavelengths out of wavelength-division multiplexed light, a step for comparing the two lights and a step for controlling excited light to the optical-fiber amplification medium that amplifies the wavelength-division-multiplexed light based upon the result of the comparison and controlling the inclination of the gain of the wavelength-division-multiplexed light.

Another gain equalizing method includes a step for selecting two lights having different wavelengths out of wavelength-division-multiplexed light, a step for comparing the two lights, a step for attenuating the wavelength-division-multiplexed light based upon the result of the comparison and a step for controlling excited light to the optical-fiber amplification medium based upon the attenuated wavelength-division-multiplexed light, and controlling the inclination of the gain of the wavelength-division-multiplexed light. By this method, attenuated wavelength-division-multiplexed light can be input to the optical-fiber amplification medium, or wavelength-division-multiplexed light amplified by the optical-fiber amplification medium can be attenuated.

According to the invention described above, the gain of wavelength-division-multiplexed light is automatically controlled and flattened. Also, no loss is applied to wavelength-division-multiplexed light.

### BRIEF DESCRIPTION OF THE DRAWINGS

Preferred features of the present invention will now be described, by way of example only, with reference to the accompanying drawings, in which:-
FIG. 1 is a block diagram showing a WDM optical-fiber transmission line for transmitting wavelength-division-multiplexed light;
FIG. 2 is a block diagram showing a conventional optical gain equalizer;
FIG. 3 is a block diagram showing a first embodiment of an optical gain equalizer;
FIGs. 4A and 4B are graphs showing the characteristic of an optical-fiber amplification medium (an erbium-doped optical amplifier (EDFA));
FIG. 5 is a block diagram showing a second embodiment of the optical gain equalizer;
FIG. 6 is a block diagram showing a third embodiment of the optical gain equalizer;
FIG. 7 is a block diagram showing a first embodiment of an optical gain equalizer provided with a variable attenuator;
FIG. 8 is a block diagram showing a second embodiment of the optical gain equalizer provided with the variable attentuator;
FIG. 9 is a block diagram showing a third embodiment of the optical gain equalizer provided with the variable attenuator;
FIG. 10 is a block diagram showing a fourth embodiment of the optical gain equalizer provided with the variable attenuator;
FIG. 11 is a block diagram showing a fifth embodiment of the optical gain equalizer provided with the variable attenuator; and,
FIG 12 is a block diagram showing a sixth embodiment of the optical gain equalizer provided with the variable attenuator.

### DETAILED DESCRIPTION OF THE PREFERRED EMBODIMENTS

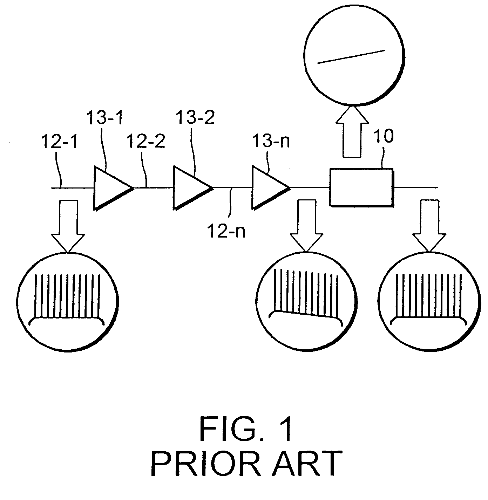

FIG. 1 shows a WDM optical fiber transmission line provided with optical repeaters 13-1 to 13-n and an optical gain equalizer 10. The inclination of the gain shown in FIG. 1 is applied to wavelength division multiplexed light by optical fibers 12-1 to 12-n and the optical repeaters 13-1 to 13-n. The optical gain equalizer 10 is provided with a characteristic that compensates the inclination of the gain of the wavelength division multiplexed light. Therefore, the gain of wavelength divisionmultiplexed light output from the optical gain equalizer 10 is flat. A WDM optical fiber transmission line is provided with such an optical gain equalizer 10 every predetermined interval.

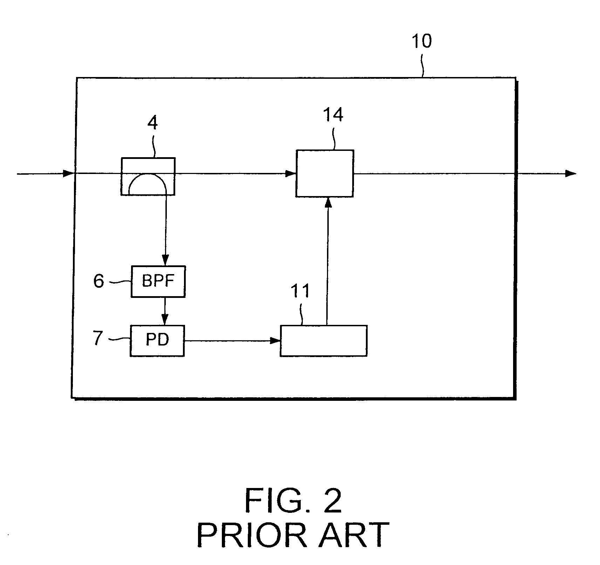

Referring to FIG. 2, a conventional block optical gain equalizer 10 is provided with a coupler 4 and a variable gain equalizer 14. Aband-pass Filter(BPF) 6 selects light having a predetermined wavelength out of wavelength division multiplexed light branched from the coupler 4,and a photodiode (PD) 7 converts this light to electric information. This electric information is supplied to a control circuit 11 that controls the variable gain equalizer 14. However, the block optical gain equalizer 10 cannot detect the inclination of the gain of wavelength division multiplexed light. Therefore, a receiving station that receives the wavelength division multiplexed light detects the inclination of the gains and the gain is equalized according to a control signal based upon the result of the detection.

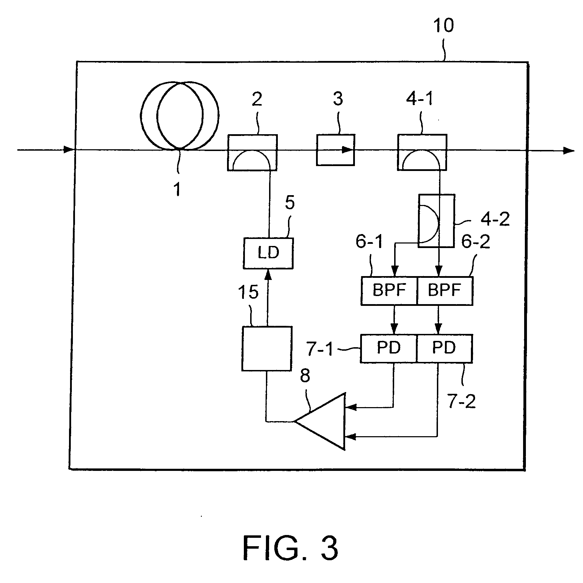

Referring to FIG. 3, an optical gain equalizer 10 according to the invention is provided with an erbium doped optical fiber (EDF) 1, a WDM coupler 2, an isolator 3 and a photocoupler 4-1 respectively concatenated. A photocoupler 4-2 is connected to the photocoupler 4-1, and band-pass filters (BPF) 6-1 and 6-2 are connected to the photocoupler 4-2. Photodiodes (PD) 7-1 and 7-2 are respectively connected to BPFs 6-1 and 6-2. The output of PDs 7-1 and 7-2 is input to a comparator 8. A pumping light source control circuit 15 receives the output of the comparator 8 and controls a laser diode (LD) 5 which is the pumping light source. Pumping light is input to EDF 1 via the WDM coupler 2.

The operation of the optical gain equalizer 10 is as follows . Wave length division multiplexed light transmitted on the optical fiber transmission line is incident on EDF 1, is amplified and is branched by the photocoupler 4-1. One of two branched lights by the photocoupler 4-1 propagates on the optical fiber transmission line as it is. The other branched light is further incident on the photocoupler 4-2 and is branched. BPFs 6-1 and 6-2 respectively select light having a predetermined wavelength (λSV1, λ SV2) out of each branched light. It is desirable that these two wavelengths are the shortest wavelength and the longest wavelength of signal lights included in wavelength division multiplexed light. However, lights of a different wavelength may be also selected. PDs 7-1 and 7-2 convert each of these two selected wavelengths of light to electric information (each voltage value) and the comparator 8 compares these voltage values. The pumping light source control circuit 15 controls LD 5 based upon the output of the comparator 8. LD 5 sends pumping light to EDF 1 via the WDM coupler 2 according to the control. The control can be performed so that difference between the voltage values (that is, levels of light) is fixed. Pumping light source control circuit 15 may not be present, and the output of the comparator 8 is then sent directly to LD 5.

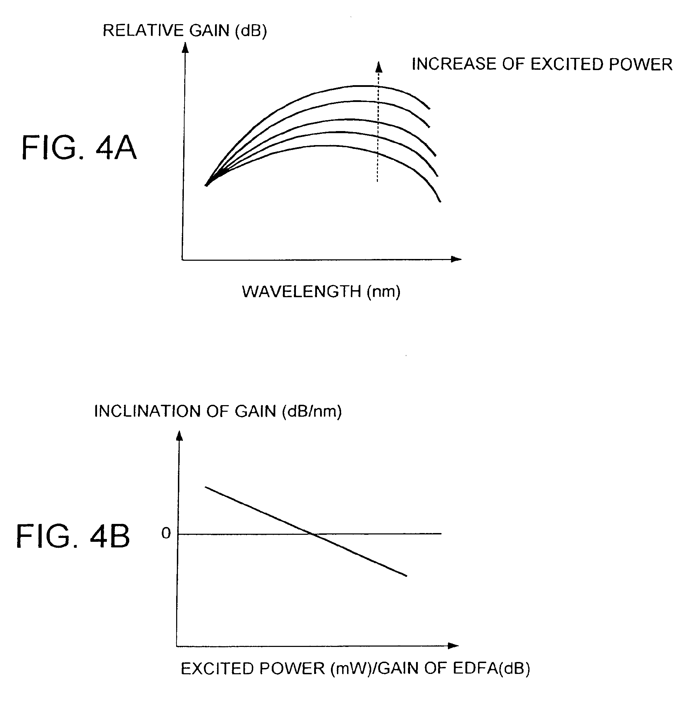

The gain of EDF 1 is controlled by pumping light and, as a result, the inclination of the gain of EDF 1 is controlled. The reason is as follows . FIG. 4A is a graph showing a relationship between the relative gain of EDF and wavelength. The relative gain has a maximum value at a specific wavelength. At this time, when the power of pumping light is increased, the relative gain increases. Relationship between the inclination of the gain (dB/nm) and the power (mW) of pumping light/the gain (dB) of EDF is shown in a graph in FIG. 4B. That is, FIG. 4B shows that when the power of pumping light varies, the inclination of the gain of EDF substantially linearly varies. Therefore, the optical gain equalizer shown in FIG. 3 selects two lights having different wavelengths out of wavelength division multiplexed light, acquires the difference in level, that is, the inclination of the gain of wavelength division multiplexed light with the comparator 8, controls the power of pumping light in EDF, and compensates the inclination of the gain. As the optical gain equalizer itself can detect the inclination of the gain of wavelength division multiplexed light and can automatically control it, the compensating operation requires no control signal from an external device.

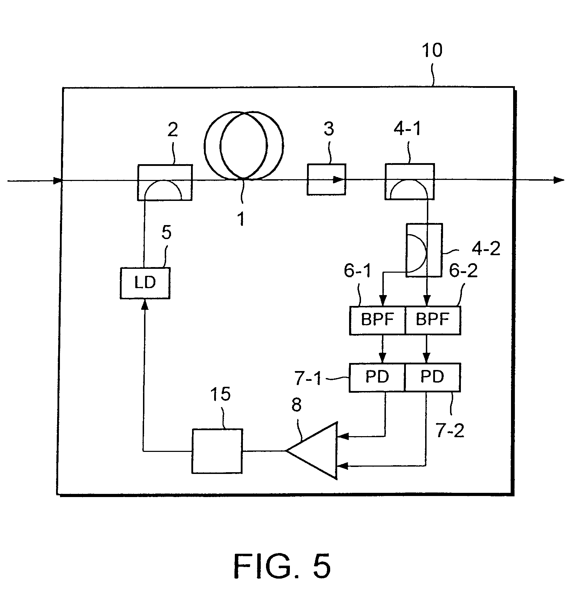

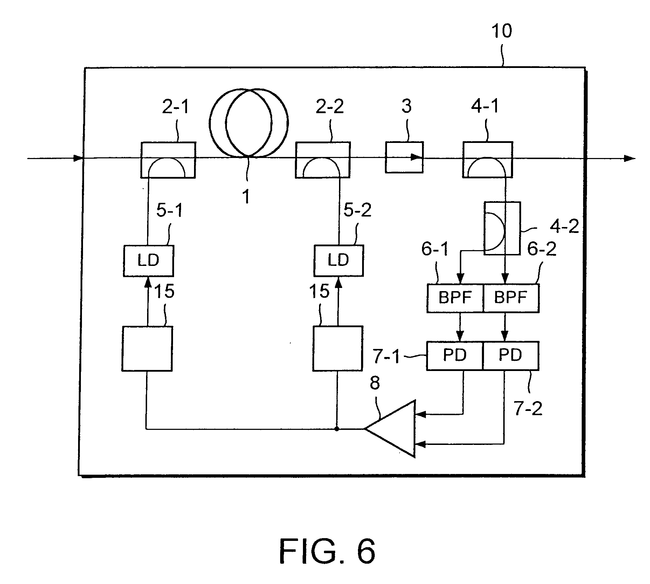

FIGs . 5 and 6 show embodiments related to the optical gain equalizer shown in FIG. 3. In the optical gain equalizer shown in FIG. 3, excited light is incident on EDF 1 and leaves from the output side of EDF 1 via WDM coupler 2. In optical gain equalizers shown in FIGs. 5 and 6, pumping light is respectively incident on EDF 1 from the input side of EDF 1 and from the output side.

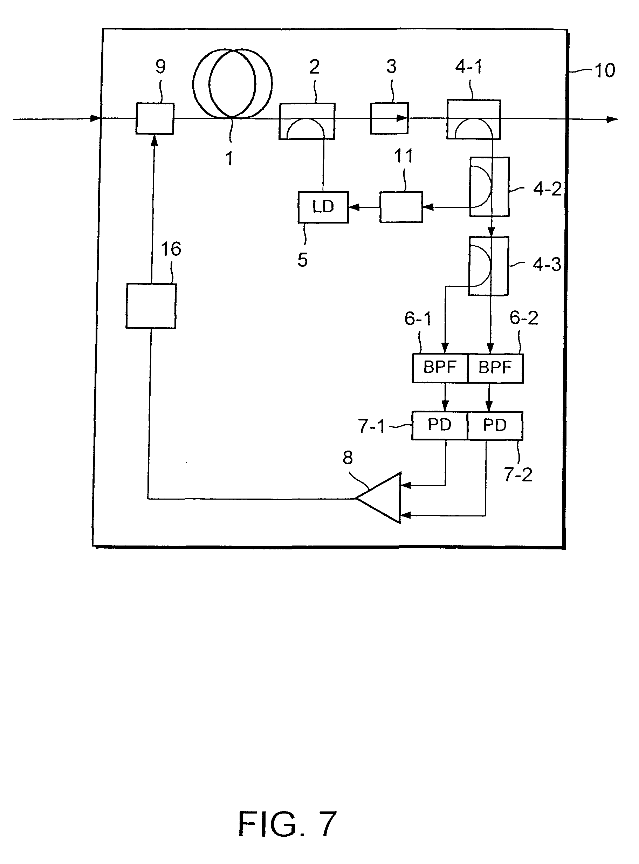

Referring to FIG. 7, an optical gain equalizer equivalent to another embodiment of the invention is provided with a variable attenuator 9, an erbium doped optical fiber (EDF) 1, a WDM coupler 2, an isolator 3 and a photocoupler 4-1 respectively concatenated from the input side. A photocoupler 4-2 to which one branched light is input is connected to the photocoupler 4-1. A control circuit 11 and a photocoupler 4-3 are connected to the photocoupler 4-2. The control circuit 11 controls LD 5 and sends pumping light to EDF 1 via the WDM coupler 2. BPFs 6-1 and 6-2 are connected to the photocoupler 4-3. PDs 7-1 and 7-2 are respectively connected to BPFs 6-1 and 6-2. Each output of PDs 7-1 and 7-2 is input to a comparator 8. A variable attenuator control circuit 16 that controls the variable attenuator 9 is connected to the comparator 8.

The operation of the optical gain equalizer 10 shown in FIG. 7 is as follows. The photocoupler 4-1 branches wavelength division multiplexed light and sends one branched light to the photocoupler 4-2. The photocoupler 4-2 further sends the branched light to the control circuit 11 and the photocoupler 4-3. The control circuit 11 controls the power of pumping light output by LD 5 based upon the level of input branched light and controls the gain of EDF 1. BPFs 6-1 and 6-2 respectively select light having a predetermined wavelength (λSV1, λSV2) out of each branched light from the photocoupler 4-3. It is desirable that these two wavelengths are the shortest wavelength and the longest wavelength of signal lights included in wavelength division multiplexed light. However, light having other wavelengths may also be selected. PDs 7-1 and 7-2 respectively convert these two selected wavelengths of light to electric information (voltage values), and the comparator 8 compares these voltage values. The variable attenuator control circuit 16 controls the variable attenuator 9 and lowers the level of wavelength-division-multiplexed light incident on EDF 1. At this time, EDF 1 enhances the power of excited light and increases the gain corresponding to the lowering of the level of incident light. Therefore, the inclination of the gain of wavelength-division-multiplexed light varies according to the variation of the power of excited light, and the gain can be flattened.

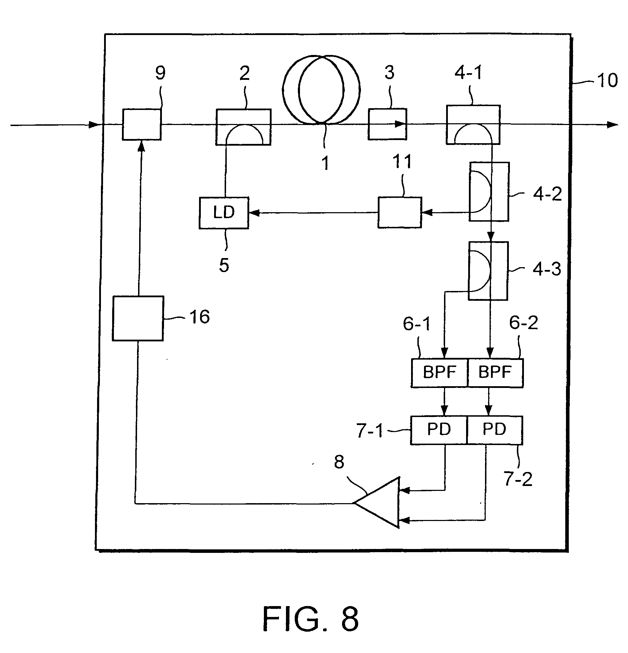

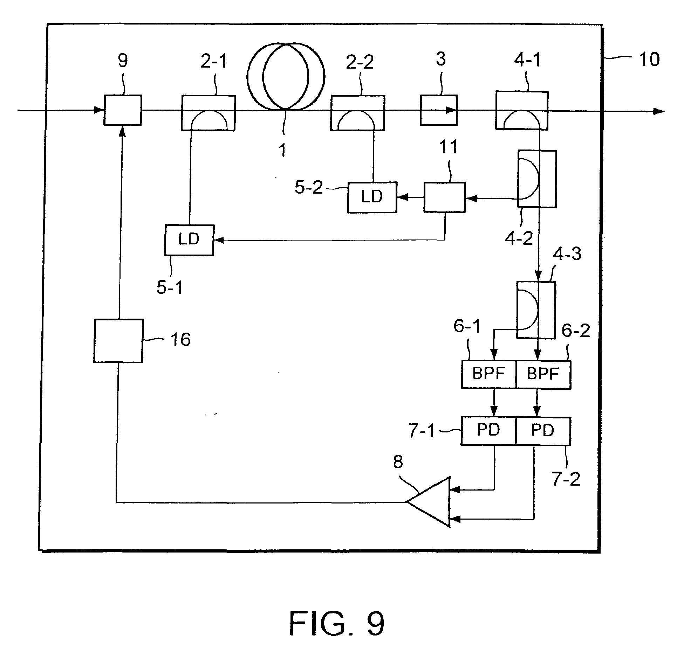

FIGs. 8 and 9 show embodiments related to the optical gain equalizer 10 shown in FIG. 7. In the optical gain equalizer shown in FIG. 7, excited light is incident on EDF 1 from the output side of EDF 1 via the WDM coupler 2. In optical gain equalizers shown in FIGs. 8 and 9, excited light is respectively incident on EDF 1 from the input side of EDF 1 and from the output side.

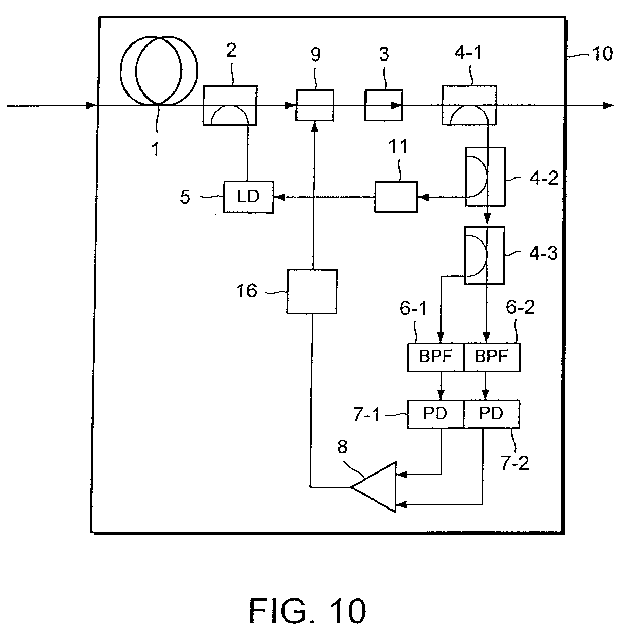

FIG. 10 shows another embodiment of the optical gain equalizer. An optical gain equalizer 10 shown in FIG. 10 has the same basic configuration as that of the optical gain equalizer shown in FIG. 7. However, a variable attenuator 9 is installed on the output side of EDF 1. Therefore, attenuated wavelength division multiplexed light is sent to a control circuit 11 that controls LD 5. Therefore, the control circuit 11 controls LD 5 and enhances the power of excited light sent to EDF 1. As a result, the inclination of the gain of wavelength-division-multiplexed light varies and the gain can be flattened.

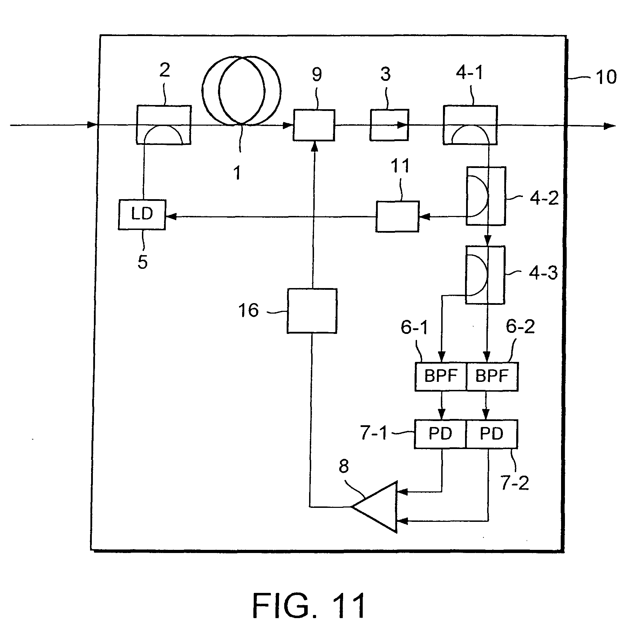

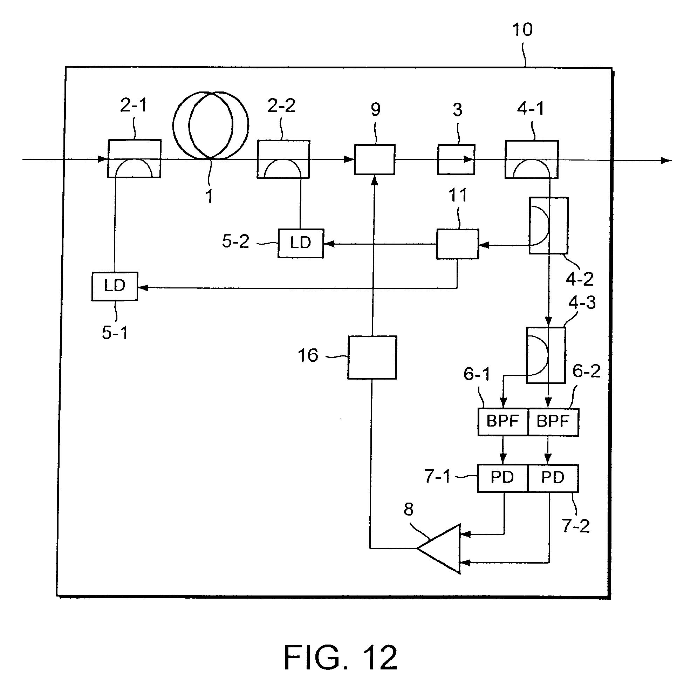

Optical gain equalizers shown in FIGs. 11 and 12 have the same basic configuration as that of the optical gain equalizer shown in FIG. 10. However, in these optical gain equalizers, pumping light is respectively incident on EDF 1 from the input side of EDF 1 and from the output side.

Wavelength division multiplexed light which the optical gain equalizer according to the invention processes is light in a band of 1.55 *µ*m for example. The components of the optical gain equalizer are all well known parts.

The optical gain equalizer and the gain equalizing method according to the invention can amplify wavelength division multiplexed light without control from an external device and can flatten the inclination of the gain. Therefore, an interval at which the optical gain equalizers are installed can be extended on the optical fiber transmission line.

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the scope of the following claims.

While the present invention has been described in its preferred embodiments, it is to be understood that the words which have been used are words of description rather than limitation, and that changes may be made to the invention without departing from its scope as defined in the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

An optical gain equalizer is provided with an erbium-doped optical fiber (EDF). The gain equalizer selects two lights out of wavelength-division-multiplexed light, controls pumping light to the EDF based upon the result of the comparison of the levels, and flattens the inclination of the gain of the wavelength-division-multiplexed light. Another optical gain equalizer is provided with an EDF and a variable attenuator. The optical gain equalizer selects two wavelengths of the wavelength-division-multiplexed light and attenuates the wavelength-division-multiplexed light based upon the result of a comparison between the levels of the two selected wavelengths of light. The pumping light power to the EDF that amplifies the wavelength-division-multiplexed light is controlled based upon this attenuation, and the inclination of the gain of the wavelength-division-multiplexed light is flattened.

## Claims

1. An optical gain equalizer that controls the gain wavelength characteristic of wavelength-division-multiplexed light, comprising:
an optical fiber amplification medium that amplifies wavelength-division-multiplexed light;
an optical directional coupler that branches the amplified wavelength-division-multiplexed light;
a filter that selects a first light and a second light out of the branched light; and,
a control means that controls the optical-fiber amplification medium based upon a difference in level between the first light and second light.

2. An optical gain equalizer as in claim 1, also comprising a variable optical attenuator for attenuating wavelength-division-multiplexed light, wherein the control means controls the optical-fiber amplification medium by means of the variable optical attenuator.

3. An optical gain equalizer as in claim 1, wherein said control means comprises:
an optical receiver that respectively converts the first light and second light to electrical information;
a comparator that compares the electrical information; and,
a pumping light source that sends pumping light to said optical-fiber amplification medium based upon the output of the comparator.

4. An optical gain equalizer as in claim 2, wherein said control means comprises:
an optical receiver that respectively converts the first light and second light to electrical information;
a comparator that compares the electrical information; and,
a control circuit that controls said variable optical attenuator based upon the output of the comparator.

5. An optical gain equalizer according to claim 3, wherein said control means comprises a pumping-light-source control circuit that controls the pumping light source.

6. An optical equalizer according to any preceding claim, wherein the pumping light is input from at least one of an input side and an output side of the optical-fiber amplification medium.

7. An optical gain equalizer according to any preceding claim, wherein the first light and second light have different wavelengths from each other.

8. An optical gain equalizer according to any preceding claim, wherein the first light and second light respectively have the shortest and longest wavelength out of the signal-light wavelengths included in the wavelength-division-multiplexed light.

9. An optical gain equalizer according to claim 2 or 4, wherein the variable optical attenuator is installed on the input side of the optical fiber amplification medium.

10. An optical gain equalizer according to claim 2 or 4, wherein the variable optical attenuator is installed on the output side of the optical fiber amplification medium.

11. An optical gain equalizer for controlling the gain/wavelength characteristic of a WDM light signal, comprising optical amplification means for amplifying the WDM signal, sensing means for sensing a difference in levels of two signals within the WDM signal, and means for controlling the amplification means in response to the sensing means.

12. A method of equalizing the gain of wavelength-division-multiplexed light, comprising:
selecting two lights having mutually-different wavelengths out of wavelength-division-multiplexed light;
comparing the two selected lights; and,
controlling, based upon the result of the comparison, pumping light to an optical-fiber amplification medium that amplifies the wavelength-division-multiplexed light, and thus a gain inclination of the wavelength-division-multiplexed light.

13. An equalizing method as in claim 12, wherein the controlling step comprises:
attenuating wavelength-division-multiplexed light based upon the result of the comparison; and,
controlling the pumping light to the optical-fiber amplification medium based upon the attenuated wavelength-division-multiplexed light.

14. An equalizing method as in claim 12, wherein attenuated wavelength-division-multiplexed light is input to an optical fiber amplification medium.

15. An equalizing method as in claim 12, wherein wavelength-division-multiplexed light amplified by an optical-fiber amplification medium is attenuated.

16. A method of equalizing the gain of a WDM light signal, comprising sensing a difference in levels of two signals within the WDM signal and controlling amplification of the WDM signal in response to said difference.
